# EUROPEAN PATENT SPECIFICATION

(11) **EP 3 929 144 B1**
(45) Date of publication and mention of the grant of the patent: **20.11.2024**
(21) Application number: 21180484.4
(22) Date of filing: 19.06.2021
(51) Int. Cl.: B66D 5/10, B27G 21/00, B27L 7/00, F16D 49/10, B66D 5/24, B66D 1/16, A01G 23/00, B66D 1/00, F16D 65/14, F16D 125/64

(54) **A MECHANICAL WINCH WITH IMPROVED ERGONOMICS**
EINE MECHANISCHE WINDE MIT VERBESSERTER ERGONOMIE
UN TREUIL MÉCANIQUE À L'ERGONOMIE AMÉLIORÉE

(30) Priority: 22.06.2020 SI 202000117
(43) Date of publication of application: 29.12.2021
(73) Proprietor: Pisek - Vitli Krpan, d.o.o., 3240 Smarje pri Jelsah (SI)
(72) Inventor: Pisek, Franc, 3240 Smarje pri Jelsah (SI)
(74) Representative: Patentni Biro AF d.o.o.

(56) References cited:
- DE-A1- 2 849 513
- JP-A- S4 942 042
- JP-U- S4 932 354
- "Vitli KRPAN Brochure", 1 August 2016, VITLI KRPAN, Slovenië, article ANONYMOUS: "Vitli KRPAN reliably stronger", pages: 1 - 52, XP055860692

## Description

### Field of the invention

The present invention belongs to the field of forestry winches, more precisely to the field of constructional details in mechanical forestry winches, which relate to control, namely activation of pulling and shutting down. The present invention relates to a mechanical winch with improved ergonomics.

### Background of the invention and the technical problem

Mechanical winches are characterized in that their control is performed with a mechanism, which has a first rope (usually green) for activation of pulling and a second rope (usually red) for release (deactivation) of the brake (an expression that is commonly used is also a brake for proportional release).

When the first, green rope is pulled for activation of winding, the brake is automatically activated, which ensures that the brake belt slides along the winch drum, but it does not brake, because the drum is rotating in the direction of winding. Consequently, the drum is rotated, rope is wound onto it and the load is pulled towards the winch. When the first rope for activation of winding is released with the load attached, the drum would rotate in the direction of unwinding of the rope, which is automatically prevented by the activated brake. This is enabled by an eccentric connected to the brake belt. Thus, the drum does not rotate and the rope is not winding anymore, which consequently holds the load steady.

In case the wire rope has to be pulled out, the second, red rope for deactivation of the brake has to be pulled, which via a special lever system releases the brake belt, thus allowing rotation of the drum, wherein the said lever system is connected to the brake belt so that the latter can be partly released using a handle. By pulling the second rope the brake can be released in two manners, i.e., proportionally with slight pulling so that the load is released in a step-wise manner, or completely with full movement to the position in which the brake is completely deactivated, thus locking the lever system and allowing the rope to freely unwind. The latter is used for example when pulling of the rope is needed during fixing of the load. During operation of the brake for proportional release the cardan shaft or the sprocket with the chain for transferring torque from the drive onto the drum still rotates (idle state). In case the first rope for activation of pulling is pulled, the brake is re-activated and the above-described process is repeated.

For activation of pulling a large force is needed in order to release the break, while at the same time the user has to have enough space for manipulation of ropes. Therefore, the technical problem, which is solved by the present invention, is a constructional design of a mechanism that will have an improved ergonomics of control, i.e., a smaller force during rope pulling for activation of pulling as well as a reduced length of pulling of the first and second rope.

### State of the art

Known mechanical winches, such as winches series SI, E and ER of manufacturer Vitli Krpan, have the above-described control mechanism, of which the largest problem is the force with which the user has to apply to release the brake in order to activate pulling. Such disclosure is available at the address www.vitli-krpan.com/cz/files/default/katalogi/KATALOG%202016%20GB%20
print.pdf showing one of the catalogues for these winch series. Connections between the elements of the mechanism are established using a complicated lever system that requires the user to use a significant force, in order to move the said elements in the appropriate sequence. The applicant is not aware of any other mechanical winches in the market that would not have the same disadvantage.

Document JPS4942042A discloses a mechanical winch according to the preamble of claim 1, which is equipped with lever systems and ropes arranged to pull said lever systems in order to operate the winch. The brake handle is not shaped in the same manner as in the present invention and thus the disadvantage of non-optimal use ergonomics persists.

Patent application DE2849513A1 discloses a winch which is particularly for a vehicle used in forestry etc. having a common control for the brake and friction clutch. The control mechanism for brake and clutch comprises a lever spring-loaded in the application direction of the brake and actuated by a cam, which also works with a selector, for the clutch. The cam has a first section actuating the brake lever, adjacent to a recess locking the brake in the neutral position. While turning through this section the selector engages the friction member of the clutch. Opposite this section and adjacent to the neutral recess the cam has a second section for the brake lever. A catch secures the cam in a position locking the brake free at the end of this second section.

Description of the solution to the technical problem

The technical problem is solved as described in the independent claim, while the preferred embodiments are defined in the dependent claims.

The mechanical winch according to the invention has all usual constructional elements of mechanical winches known to the person skilled in the art, such as:
- housing of the winch, inside which a drum for winding a pulling rope and lamellae of a clutch, a sprocket with a chain and a brake,
- a first (usually green) rope for activation of pulling and winding of the pulling rope onto the drum, which is with pulleys and levers connected with the clutch of the winch drum,
- a second (usually red) rope for deactivation of the brake, which is via a brake handle connected to the brake belt installed around the drum, and
- a guide of the pulling rope and the pulling rope with the end piece.

The advantage of the mechanical winch with improved ergonomics is in that a minimum force and a minimum movement for pulling to rope for deactivation of the brake are needed to move the brake belt away from the winch drum. This is achieved with a specially shaped brake handle (also called brake lever), onto which the second (red) rope for brake deactivation is connected. The brake handle is provided with a curved cut-out along which a rolling element (such as a bearing, cylinder, bolt or a similar element) can move, wherein rotation of the brake handle and movement of the rolling element along the curved cut-out generate a linear movement, which is transferred onto the brake belt via an eccentric or any other suitable element of mechanism, thereby causing the brake belt to squeeze or release. The curved cut-out has in its first (upper) part a flatter part, as more energy or higher force is needed for the linear movement in the beginning if compared to the continuation of the movement. This flatted part is crucial for enabling the user to use smaller force in order to move the brake handle, which consequently affects the status of the brake belt on the drum. The second part of the curved cut-out is steeper, as a larger linear movement is needed, wherein the force during the linear movement is minimal. Movement of the rolling element along the steeper part is faster, thus the rolling element reaches its extreme position faster, therefore the pull movement (pull of the rope) is shorter than in known solutions.

The mechanism for controlling the mechanical winch according to the invention thus comprises:
- the first rope for activation of pulling, wherein the rope is through pulleys lead to the handle connected with a clutch, which may trigger rotation of the drum, onto which pulling rope is wound, and
- the second rope for releasing (deactivation) of the brake, which is connected with the brake handle,
wherein the brake handle is provided with the curved cut-out arranged to allow movement of the rolling element, the movement of which is via the eccentric arranged to affect the state of the brake belt on the winch drum.

The brake handle is preferably installed in the housing of the brake mechanism, which is arranged for installation onto the housing of the winch near the brake belt. The housing of the brake mechanism comprises a bottom part and a left and a right part perpendicular to the said bottom part, the left and the right part having the same design. The left and the right part of the housing of the brake mechanism have a groove, into which the rolling element sits, when the brake handle is installed in the housing of the brake mechanism. The rolling element, which may be a bolt, a bearing, a cylinder or any other suitable element which can be moved along the curved cut-out, is installed in the housing of the brake mechanism. The rolling element is via a distancing element connected with the eccentric, so that the eccentric is movably mounted in the distancing element in a suitable pivot, while at the same time the eccentric is mounted on both ends of the brake belt. The function of the eccentric is squeezing or releasing the brake belt. The lower part of the housing has an opening, through which the distancing element with a spring is installed, said distancing and spring being connected via the eccentric with the brake belt under the winch housing. Upon turning the brake handle the rolling element moves along the curved cut-out, the linear movement is via the distancing element or any other suitable element transferred to the eccentric and consequently onto the brake belt, so that the latter is squeezed when the distancing element is moved upwards, or released when the distancing element is moved downwards. The brake belt namely slides along the drum, when the rope is being wound on the drum, while during unwinding of the rope, the brake belt squeezes the drum and disables rotation.

The brake handle or the lever has on one side a longer part with an attachment for the second rope for releasing the brake, with which the user can control the position of the brake handle and thus the compression of the brake belt via the eccentric, with which the user can control the position of the brake handle and thus the compression of the brake belt via the eccentric, while on the other end the shorter end has a second attachment for a connecting element, which connects the brake handle with an automatic element, which influences the state of operation of the winch. The connecting element can be a plate, a rod or a Bowden cable. The automatic element is a mechanism, which ensures winch safety and ensures that upon activation of pulling the brake is activated, while upon pulling the second rope for brake deactivation, the brake is indeed deactivated and locked. The said automatic element is installed on the upper side of the winch housing. Said automatic element comprises a housing, inside which two elements travel alternately. Between two elements are two balls, which enable alternate operation - deactivation of the brake and activation of pulling. The balls affect the position of the two elements in the automatic element, said elements alternately moving left and right. The bottom part is connected to the brake handle, while the upper part is connected to the handle for activation of pulling. Both elements hence operate alternately, wherein pulling of the red rope the lever is locked.

Control and operation of the winch is the same as in known solution, only that the improved construction of the brake handle allows use of a smaller force for releasing the brake, which makes the work with the winch easier. The working space needed for winch work is also smaller. Consequently, the present invention contributes to safety, as the user working in the woods is often faced with limited space and uneven surface, which further destabilizes the user.

Preferably the whole lever system of the improved mechanism for improving control ergonomics is hidden inside a rigid protective housing, which is attached to the winch or is preferably made as a part of the winch housing, while a part of the rope and the optional handle for activation of pulling and a part of the rope and the handle for releasing the brake are not inside the said protective housing, so that they are accessible to the user, wherein the ropes are led to the exterior through an opening in the protective housing. The said opening, which may have any shape, can be on any side of the protective housing, wherein the opening may be provided with elements for improving sliding of the rope. For example, the opening may be encased with rubber or plastic material in order to decrease the possibility of damaging the rope due to friction against the preferred metal housing. The protective housing as such may be made from any suitable metal material, which is suitable for housings of winches and similar machines. The protective housing is installed on the winch in a non-removable manner, for example with welding, or in a removable manner with screws or similar elements, which improves access to the control mechanism in case of breakdowns or maintenance or repairs. Preferably, the protective housing is made as a part of the winch housing, which allows better construction, safety and stability.

In case the whole lever system is installed inside the protective housing, particularly inside the housing of the winch, the position of the brake belt is further altered, i.e., it is rotated around the axis of the drum for 90° if compared to known solutions.

Alternatively, the whole lever system of the improved mechanism of the winch according to the invention can be provided in the exterior of the mechanical winch, as known until now.

In the scope of the invention as described herein and defined in the claims, other embodiments of the mechanical winch obvious to a skilled person are possible, which does not limit the scope of the invention as described herein and defined in the claims.

The mechanical winch with improved ergonomics of control will be described in further detail based on figures, which show:
- Figure 1: A known mechanical winch with an external control mechanism
- Figure 2: A mechanical winch with an improved control mechanism, which ensures improved ergonomics
- Figure 3: Side view to the mechanical winch shown in figure 2
- Figure 4: Detail A
- Figure 5: Explosion view of the key parts of the improved mechanism
- Figure 6: The brake handle with the curved cut-out

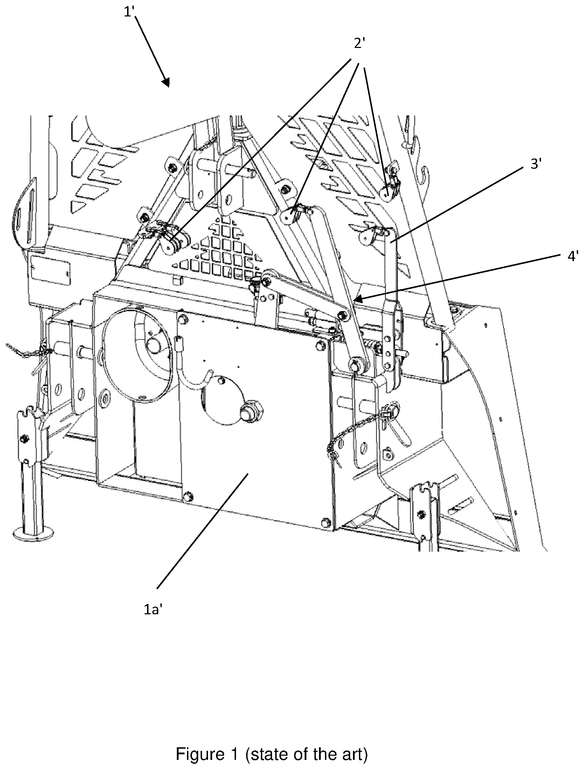

Figure 1 shows a known mechanical winch 1, which has a control mechanism on the exterior of the winch, wherein the drum for winding the pulling rope and drive parts are located inside a housing 1a' of the winch, while the control mechanism is connected to the drum and the drive parts from the side. The control mechanism of the mechanical winch shown in figure 1 comprises:
- the first rope and the handle for activation of pulling (not shown), wherein the rope is through pulleys 2' lead to the handle 3' connected with a clutch, which may trigger rotation of the drum, onto which pulling rope is wound, and
- the second rope and the handle for releasing (deactivation) of the brake (not shown).

When the first, green rope is pulled for activation of winding, the brake is automatically activated, which ensures that the brake belt slides along the winch drum, but it does not brake, because the drum is rotating in the direction of winding. Consequently, the drum is rotated, rope is wound onto it and the load is pulled towards the winch. When the first rope for activation of winding is released with the load attached, the drum would rotate in the direction of unwinding of the rope, which is automatically prevented by the activated brake. This is enabled by an eccentric connected to the brake belt. Thus, the drum does not rotate and the rope is not winding anymore, which consequently holds the load steady.

When the wire rope has to be pulled out, the second, red rope for brake deactivation is pulled, which via a special lever system releases the brake belt, thus allowing rotation of the drum, wherein the said lever system 4' is connected to the brake belt so that the latter can be partly released using a handle. By pulling the second rope the brake can be released in two manners, i.e., proportionally with slight pulling so that the load is released in a step-wise manner, or completely with full movement to the position in which the brake is completely deactivated, thus locking the lever system and allowing the rope to freely unwind. The latter is used for example when pulling of the rope is needed during fixing of the load. During operation of the brake for proportional release the cardan shaft or the sprocket with the chain for transferring torque from the drive onto the drum still rotates (idle state). In case the first rope for activation of pulling is pulled, the brake is re-activated and the above-described process is repeated.

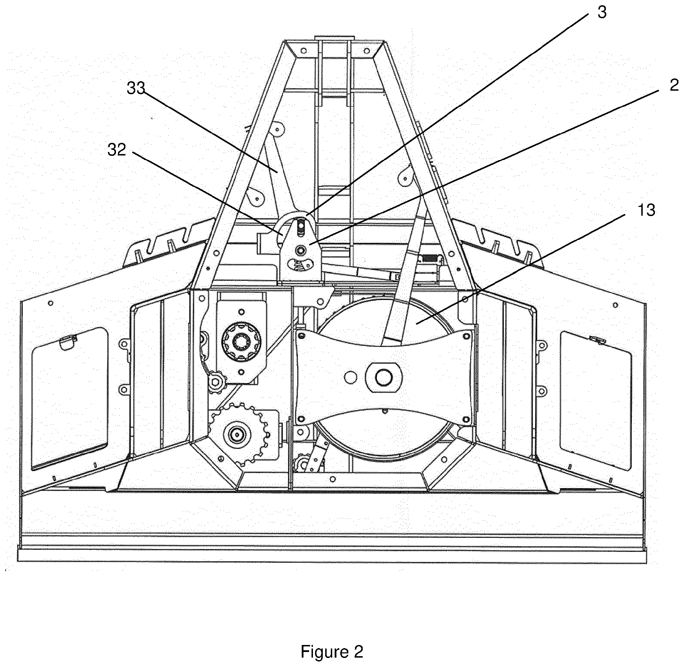

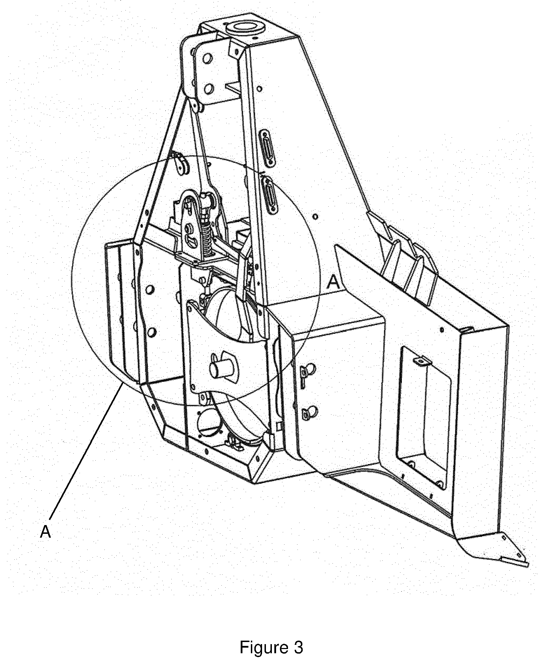

Figures 2 and 3 show the mechanical winch according to the invention, in which ergonomics of control is improved. It operates in the same manner as already known winches, however, for releasing the brake a smaller force is needed, as the brake handles which is connected to the second (red) rope for brake deactivation is provided with a curved cut-out, along which a rolling element moves. Once the rope for brake deactivation is pulled, the rolling element travels along the flatter part of the cut-out and then along the steeper part of the cut-out so that the brake belt is released sooner and the user's move of pulling the rope is shorter. The linear movement of the brake handle and the rolling element is transferred to the eccentric, which is connected to the brake belt of the winch drum.

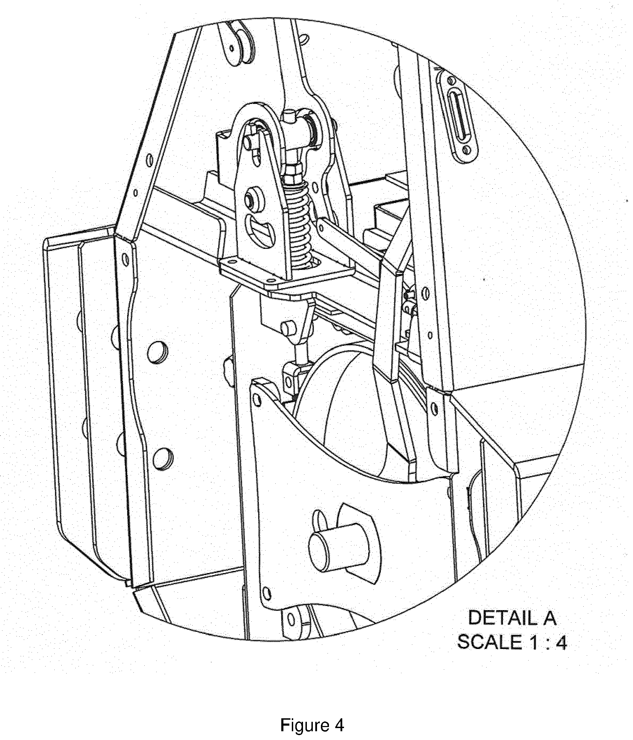

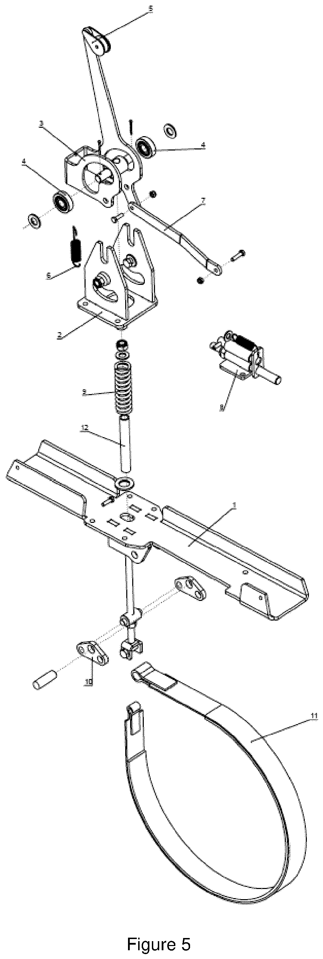

Important parts of the mechanism, which are key for the desired effect are shown in figure 4 and in explosion view in figure 5. The control mechanism of the mechanical winch thus comprises:
- the first rope (not shown) for activation of pulling, wherein the rope is led via pulleys to the handle connected with the clutch, which may trigger rotation of the drum, onto which the pulling rope is wound, and
- the second rope (not shown) for releasing (deactivation) the brake, which is connected to the brake handle,
wherein the brake handle 3 is in its middle part 31 provided with a curved cut-out 32 arranged to allow movement of the rolling element 4, movement of the said rolling element via the eccentric 10 affects the status of the brake belt 11 on the winch drum. The brake handle 3 is installed in the housing 2 of the brake mechanism, which ais arranged for installation on the housing of the winch 1 near the brake belt 11. The rolling element 4, which may be a bolt, a bearing, a cylinder or any other suitable element, which can move along the curved cut-out 32, is installed in the housing of the brake mechanism 2 and is connected to the eccentric 10 so that the linear movement can be transferred onto the said eccentric 10, which squeezes or releases the brake belt 11. The housing 2 of the brake mechanism comprises a bottom part 21 and a left 22a and a right 22b part, which are perpendicular to the bottom part 21, said left and right parts 22a and 22b being identically shaped. The left 22a and the right 22b part of the brake mechanism 2 have a groove into which the bearing 4 fits when the brake handle is installed in the housing of the brake mechanism. The bearing 4 is connected to the eccentric 10 with a spring 9 and a distancing element 12. The bottom part 21 has an opening 21', through which the distancing element 12 with the spring 9 can be installed, said distancing element 12 and the spring 9 being connected to the brake belt 11 under the winch 1 housing via the eccentric 10.

The brake handle 3 or the lever has on one end a longer part 33 with an attachment for the second rope for releasing the brake, with which the user can control the position of the brake handle 3 and thus the compression of the brake belt 11, while it has on the other end a shorter part 34 with a second attachment for a connecting element 7, which connects the brake handle 3 with an automatic element 8, which influences the state of winch operation. The connecting element 7 can be a plate, a rod or a Bowden cable. The automatic element 8 may be installed on the upper part of the winch 1 housing and is directly connected to the brake, so that it can be activated in case the first rope for activation of pulling is pulled or deactivated in case the second rope for brake deactivation is pulled. When the brake is activated, it ensures that the brake belt slides along the winch drum, but does not brake, as the drum rotates in the direction of winding. Said automatic element 8 comprises a housing, inside which two elements travel alternately. Between two elements are two balls, which enable alternate operation - deactivation of the brake and activation of pulling.

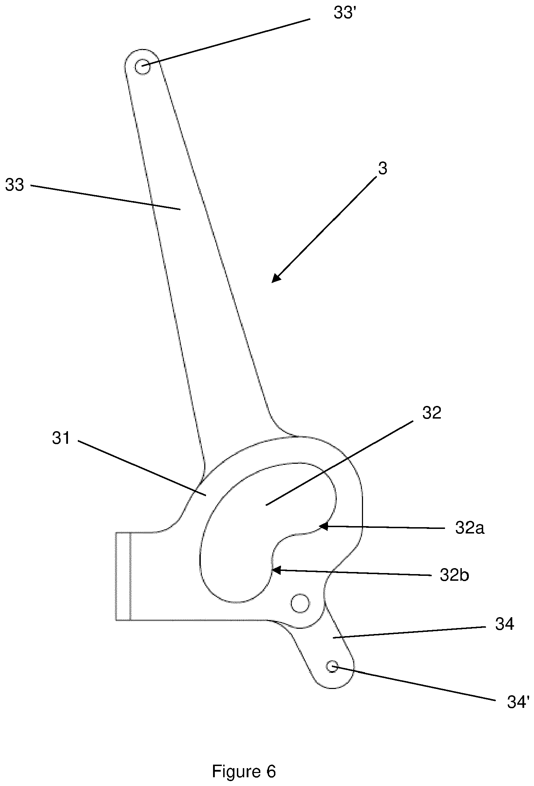

The shape of the brake handle 3 with the curved cut-out 32 in the middle part 31 is shown in figure 6, wherein the cut-out 32 has a flatter part 32a and a steeper part 32b, whereas the handle 3 itself has a longer upper part (leg) 33 and a shorter bottom part (leg) 34, wherein the longer part 33 has an attachment 33' for the second rope for releasing the brake, with which the user can control the position of the brake handle and thus the compression of the brake belt, while on the other hand the shorter part 34 has a second attachment 34' for the connecting element 7, which connects the brake handle with the automatic element 8, which influences the state of the brake. The method of operation of the improved mechanism for controlling the mechanical winch according to the invention is the following:
- upon pulling the second, red rope for brake deactivation, the brake handle 3 is moved due to movement of an element, preferably a pulley 5, mounted in an attachment 33' of an upper part 33 of the brake handle 3, so that the rolling element 4 installed in the curved cut-out 32 of the brake handle 3 moves along the flatter part in the direction towards the housing 2 of the brake mechanism; at the same time the lower part 11a of the brake belt 11 is moved downwards via the distancing element 12 and the spring 9, which releases the brake belt 11 around the drum 13 and enables rotation of the drum 13 and consequently unwinding of the rope from the drum 13 of the winch;
- upon releasing the second, red rope, the rolling element 4 returns to its initial position in the curved cut-out 32 of the brake handle 3, which pulls the distancing element 12 upwards and consequently the lower part 11a of the brake belt 11, thus squeezing the brake belt 11 around the drum 13.

## Claims

1. A mechanical winch with improved ergonomics with a mechanism for controlling the winch comprising:
- a drum (13) onto which a pulling rope is wound,
- a brake comprising a brake handle (3) and a brake belt (11) installed on the drum,
- a clutch comprising a handle (3'),
- a first rope for activation of pulling, wherein the first rope is led via pulleys (2') to the handle (3') connected with the clutch, which is arranged to trigger rotation of the drum (13), and
- a second rope for releasing of the brake, which is connected to the brake handle (3),
**characterized in that**
the winch further comprises a rolling element (4), linear movement of which is arranged to be transferred via an eccentric or any other suitable element or mechanism in order to squeeze or release the brake belt,
and that the brake handle (3) is provided with a curved cut-out (32), arranged to allow a linear movement of the rolling element (4), and
that the curved cut-out (32) is made in a middle part (31) of the brake handle (3) wherein the cut-out (32) is in the first, upper part (32a) flatter and in the second, bottom part (32b) steeper.

2. The mechanical winch with improved ergonomics according to claim 1, **characterized in that** the rolling element (4) is a bearing, a cylinder, a bolt or any other suitable element arranged to move along the curved cut-out (32) of the brake handle (3).

3. The mechanical winch with improved ergonomics according to any of the preceding claims, **characterized in that** the rolling element (4) comprises a distancing element (12) and a spring (9) connected to the eccentric (10), so that the eccentric (10) is movably mounted in the distancing element (12) in a suitable pivot, while at the same time the eccentric (10) is attached to both ends of the brake belt (11), wherein the function of the eccentric (10) is squeezing or releasing the brake belt (11), so that the latter is arranged to be squeezed when the distancing element is moved upwards or released when the distancing element (12) is moved downwards.

4. The mechanical winch with improved ergonomics according to any of the preceding claims, **characterized in that** the brake handle (3) is installed in a housing (2) of the brake mechanism, which is arranged to be installed on a winch housing near the brake belt (11), wherein:
- the housing (2) of the brake mechanism comprises a bottom part (21) and perpendicularly to the bottom part (21) a left (22a) and a right (22b) part, which are identically shaped;
- the left and the right part (22a and 22b) of the housing (2) have a groove, inside which the rolling element (4) fits, once the brake handle (3) is installed in the housing (2);
- the bottom part (21) of the housing (2) has an opening (21'), through which the distancing element (12) with the spring (9) is installed, the distancing element (12) and the spring (9) being connected through the eccentric (10) with the brake belt (11) under the winch housing (1).

5. The mechanical winch with improved ergonomics according to any of the preceding claims, **characterized in that** the brake handle (3) has on one end of a middle part (31) a longer leg (33) with a first attachment (33') for the second rope for brake deactivation, and on the other end a shorter leg (34) with a second attachment (34') for a connecting element (7), which connects the brake handle with an automatic element (8), which ensures that upon activation of pulling the brake is activated and upon pulling the second rope for brake deactivation, the brake is deactivated and locked.

6. The mechanical winch with improved ergonomics according to the preceding claim, **characterized in that** the said automatic element (8) is installed on the upper side of the winch housing near the brake belt and comprises a housing inside which two elements are provided, which are arranged to alternately move inside the housing, and two balls installed between said elements, wherein the balls enable alternate operation of brake deactivation and activation of pulling.

7. The mechanical winch with improved ergonomics according to claim 6 or claim 7, **characterized in that** the connecting element (7) between the brake handle (3) and the automatic element (8) is a plate, a rod or a Bowden cable or any other suitable element, which allows transfer to the automatic element (8).

8. The mechanical winch with improved ergonomics according to any of the preceding claims, **characterized in that** the whole control mechanism is hidden inside a rigid protective housing, which is attached to the winch or preferably made as a part of the winch housing, wherein a part of the rope for activation of pulling and a part of the rope and the handle for releasing the brake are not inside the said protective housing for allowing accessibility to the user, wherein said ropes are led to the exterior of the protective housing through an opening in the protective housing.

9. The mechanical winch with improved ergonomics according to the preceding claim, **characterized in that** the protective housing is a part of the winch housing.

10. The mechanical winch with improved ergonomics according to claim 8 or claim 9, **characterized in that** the protective housing is installed on the winch in a non-removable manner with welding or the protective housing is removably installed on the winch, preferably with screws.

11. Method of operation of the improved mechanism for controlling the mechanical winch according to claims 3 and 4, and other claims when they are dependent thereon, **characterized in that**:
- upon pulling the second rope for brake deactivation, the brake handle (3) is moved due to movement of an element, preferably a pulley (5), mounted in an attachment (33') of the upper part (33) of the brake handle (3), so that the rolling element (4) installed in the curved cut-out (32) of the brake handle (3) moves along the flatter part in the direction towards the housing (2) of the brake mechanism; at the same time a lower part (11a) of the brake belt (11) is moved downwards via the distancing element (12) and the spring (9), which releases the brake belt (11) around the drum (13) and enables rotation of the drum (13) and consequently unwinding of the rope from the drum (13) of the winch;
- upon releasing the second rope, the rolling element (4) returns to its initial position in the curved cut-out (32) of the brake handle (3), which pulls the distancing element (12) upwards and consequently the lower part (11a) of the brake belt (11), thus squeezing the brake belt (11) around the drum (13).

## Patentansprüche

1. Eine mechanische Winde mit verbesserter Ergonomie mit einem Mechanismus zum Steuern der Winde, die Folgendes umfasst:
- eine Trommel (13), auf die ein Zugseil aufgewickelt ist,
- eine Bremse mit einem Bremshebel (3) und einem an der Trommel montierten Bremsriemen (11),
- eine Kupplung mit einem Griff (3')
- ein erstes Seil zur Aktivierung des Ziehens, wobei das erste Seil über Umlenkrollen (2') zu einem mit der Kupplung verbundenen Griff (3') geführt wird, der zum Auslösen der Drehung der Trommel (13) angeordnet ist, und
- ein zweites Seil zum Lösen der Bremse, das mit dem Bremshebel (3) verbunden ist,
**dadurch gekennzeichnet, dass** die Winde ferner ein Rollelement (4) umfasst, dessen lineare Bewegung angeordnet ist, um über einen Exzenter oder ein anderes geeignetes Element oder einen anderen Mechanismus übertragen zu werden, um den Bremsriemen zusammenzudrücken oder zu lösen, und dass der Bremshebel (3) mit einer gebogenen Aussparung (32) versehen ist, die angeordnet ist, um eine lineare Bewegung des Rollelements (4) zu ermöglichen, und
dass sich die gebogene Aussparung (32) in einem Mittelteil (31) des Bremshebels (3) befindet, wobei die Aussparung (32) im ersten, oberen Teil (32a) flacher und im zweiten, unteren Teil (32b) steiler ist.

2. Die mechanische Winde mit verbesserter Ergonomie nach Anspruch 1, **dadurch gekennzeichnet, dass** das Rollelement (4) ein Lager, ein Zylinder, ein Bolzen oder ein anderes geeignetes Element ist, das angeordnet ist, um sich entlang der gebogenen Aussparung (32) des Bremshebels zu bewegen (3).

3. Die mechanische Winde mit verbesserter Ergonomie nach einem der vorstehenden Ansprüche, **dadurch gekennzeichnet, dass** das Rollelement (4) ein Distanzelement (12) und eine mit dem Exzenter (10) verbundene Feder (9) umfasst, sodass der Exzenter (10) in einem geeigneten Drehpunkt beweglich im Distanzelement (12) gelagert ist, während gleichzeitig der Exzenter (10) an beiden Enden des Bremsriemens (11) befestigt ist, wobei die Funktion des Exzenters (10) darin besteht, den Bremsriemen (11) zusammenzudrücken oder zu lösen, sodass letzterer angeordnet ist, um zusammengedrückt zu werden, wenn das Distanzelement nach oben bewegt oder gelöst wird, wenn das Distanzelement (12) nach unten bewegt wird.

4. Die mechanische Winde mit verbesserter Ergonomie nach einem der vorstehenden Ansprüche, **dadurch gekennzeichnet, dass** der Bremshebel (3) in einem Gehäuse (2) des Bremsmechanismus installiert ist, das angeordnet ist, um an einem Windengehäuse in der Nähe des Bremsriemens (11) installiert zu werden, wobei:
- das Gehäuse (2) des Bremsmechanismus einen unteren Teil (21) und senkrecht zum unteren Teil (21) einen linken (22a) und einen rechten (22b) Teil umfasst, die identisch geformt sind;
- der linke und der rechte Teil (22a und 22b) des Gehäuses (2) eine Nut aufweisen, in die das Rollelement (4) passt, sobald der Bremshebel (3) im Gehäuse (2) installiert ist;
- der untere Teil (21) des Gehäuses (2) eine Öffnung (21') aufweist, durch die das Distanzelement (12) mit der Feder (9) installiert ist, wobei das Distanzelement (12) und die Feder (9) durch den Exzenter (10) mit dem Bremsriemen (11) unter dem Windengehäuse (1) miteinander verbunden sind.

5. Die mechanische Winde mit verbesserter Ergonomie nach einem der vorstehenden Ansprüche, **dadurch gekennzeichnet, dass** der Bremshebel (3) an einem Ende eines Mittelteils (31) einen längeren Schenkel (33) mit einer ersten Befestigung (33') für das zweite Seil zur Bremsdeaktivierung und am anderen Ende einen kürzeren Schenkel (34) mit einer zweiten Befestigung (34') für ein Verbindungselement (7), das den Bremshebel mit einem automatischen Element (8) verbindet, aufweist, das gewährleistet, dass bei Aktivierung des Ziehens die Bremse aktiviert wird und beim Ziehen des zweiten Seils zur Bremsdeaktivierung die Bremse deaktiviert und verriegelt wird.

6. Die mechanische Winde mit verbesserter Ergonomie nach dem vorstehenden Anspruch, **dadurch gekennzeichnet, dass** das automatische Element (8) auf der Oberseite des Windengehäuses in der Nähe des Bremsriemens installiert ist und ein Gehäuse umfasst, in dem zwei Elemente vorgesehen sind, die angeordnet sind, um sich abwechselnd innerhalb des Gehäuses zu bewegen, und zwei zwischen diesen Elementen installierte Kugeln, wobei die Kugeln einen abwechselnden Betrieb der Bremsdeaktivierung und Aktivierung des Ziehens ermöglichen.

7. Die mechanische Winde mit verbesserter Ergonomie nach Anspruch 6 oder Anspruch 7, **dadurch gekennzeichnet, dass** das Verbindungselement (7) zwischen dem Bremshebel (3) und dem automatischen Element (8) eine Platte, eine Stange oder ein Bowdenzug oder ein anderes geeignetes Element ist, das den Übergang auf das automatische Element (8) ermöglicht.

8. Die mechanische Winde mit verbesserter Ergonomie nach einem der vorstehenden Ansprüche, **dadurch gekennzeichnet, dass** der gesamte Steuermechanismus innerhalb eines starren schützenden Gehäuses verborgen ist, das an der Winde befestigt ist oder vorzugsweise als ein Teil des Windengehäuses hergestellt ist, wobei ein Teil des Seils zur Aktivierung des Ziehens und ein Teil des Seils und der Griff zum Lösen der Bremse nicht innerhalb des schützenden Gehäuses sind, um dem Benutzer Zugang zu ermöglichen, wobei die Seile durch eine Öffnung im schützenden Gehäuse zum schützenden Gehäuse nach außen geführt werden.

9. Die mechanische Winde mit verbesserter Ergonomie nach dem vorstehenden Anspruch, **dadurch gekennzeichnet, dass** das schützende Gehäuse ein Teil des Windengehäuses ist.

10. Die mechanische Winde mit verbesserter Ergonomie nach Anspruch 8 oder Anspruch 9, **dadurch gekennzeichnet, dass** das schützende Gehäuse nicht abnehmbar durch Schweißen an der Winde installiert ist oder das schützende Gehäuse abnehmbar an der Winde installiert ist, vorzugsweise mit Schrauben.

11. Verfahren zum Betrieb des verbesserten Mechanismus zum Steuern der mechanischen Winde nach Ansprüchen 3 und 4 und anderen Ansprüchen, wenn sie davon abhängig sind, **dadurch gekennzeichnet, dass**:
- beim Ziehen des zweiten Seils zur Bremsdeaktivierung der Bremshebel (3) aufgrund der Bewegung eines Elements, vorzugsweise einer Rolle (5), das in einer Befestigung (33') des oberen Teils (33) des Bremshebels montiert ist (3), bewegt wird, sodass sich das in der gebogenen Aussparung (32) des Bremshebels (3) installierte Rollelement (4) entlang des flacheren Teils in Richtung des Gehäuses (2) des Bremsmechanismus bewegt; gleichzeitig über das Distanzelement (12) und die Feder (9) ein unterer Teil (11a) des Bremsriemens (11) nach unten bewegt wird, wodurch der Bremsriemen (11) um die Trommel (13) gelöst wird und die Drehung der Trommel (13) ermöglicht und in der Folge das Seil von der Trommel (13) der Winde abgewickelt wird;
- beim Loslösen des zweiten Seils das Rollelement (4) in seine Ausgangsposition in der gebogenen Aussparung (32) des Bremshebels (3) zurückkehrt, wodurch das Distanzelement (12) nach oben und in der Folge der untere Teil (11a) des Bremsriemens (11) gezogen wird und somit den Bremsriemen (11) um die Trommel (13) zusammendrückt.

## Revendications

1. Un treuil mécanique à l'ergonomie améliorée avec un mécanisme de contrôle du treuil comprenant :
- un tambour (13) sur lequel un câble de traction s'enroule,
- un frein comprenant une poignée de frein (3) et une courroie de freinage (11) installée sur le tambour,
- un embrayage comprenant une poignée (3')
- un premier câble pour l'activation de la traction, où le premier câble est acheminé par des poulies (2') jusqu'à la poignée (3') raccordée à l'embrayage, qui est conçue pour déclencher la rotation du tambour (13), et
- un second câble pour le relâchement du frein, qui est raccordé à la poignée de frein (3),
**caractérisé par le fait que** le treuil comprend également un élément roulant (4), dont le mouvement linéaire est conçu pour être transféré par le biais d'un élément ou mécanisme excentrique ou tout autre élément approprié afin de comprimer ou relâcher la courroie de freinage, et **par le fait que** la poignée de frein (3) est pourvue d'une découpe courbe (32), conçue pour permettre le mouvement linéaire de l'élément roulant (4), et
**par le fait que** la découpe courbe (32) est pratiquée sur une partie centrale (31) de la poignée de frein (3), où la découpe (32) est dans la première partie supérieure (32a) relativement plate et dans la seconde partie inférieure (32b) à forte déclivité.

2. Le treuil mécanique à l'ergonomie améliorée selon la revendication 1, **caractérisé par le fait que** l'élément roulant (4) est un roulement, un cylindre, un boulon ou tout autre élément approprié conçu pour se déplacer le long de la découpe courbe (32) de la poignée de frein (3).

3. Le treuil mécanique à l'ergonomie améliorée selon l'une quelconque des revendications précédentes, **caractérisé par le fait que** l'élément roulant (4) comprend un élément d'écartement (12) et un ressort (9) raccordés à l'élément excentrique (10), de façon à ce que l'élément excentrique (10) soit installé de façon mobile sur l'élément d'écartement (12) sur un pivot approprié, tandis qu'en même temps l'élément excentrique (10) est fixé aux deux extrémités de la courroie de freinage (11), où la fonction de l'élément excentrique (10) est de comprimer ou de relâcher la courroie de freinage (11), afin que cette dernière puisse être comprimée quand l'élément d'écartement est déplacé vers le haut ou relâchée quand l'élément d'écartement (12) est déplacé vers le bas.

4. Le treuil mécanique à l'ergonomie améliorée selon l'une quelconque des revendications précédentes, **caractérisé par le fait que** la poignée de frein (3) est installée dans un boîtier (2) du mécanisme de freinage, qui est conçu pour être installé dans un carter de treuil près de la courroie de freinage (11), où :
- le boîtier (2) du mécanisme de freinage comprend une partie inférieure (21) et perpendiculairement à la partie inférieure (21), une partie gauche (22a) et une partie droite (22b), qui sont de forme identique ;
- les parties gauche et droite (22a et 22b) du boîtier (2) possèdent une rainure, dans laquelle l'élément roulant (4) se place, une fois que la poignée de frein (3) est installée dans le boîtier (2) ;
- la partie inférieure (21) du boîtier (2) a une ouverture (21'), dans laquelle l'élément d'écartement (12) avec ressort (9) est installé, l'élément d'écartement (12) et le ressort (9) étant raccordés par le biais de l'élément excentrique (10) à la courroie de freinage (11) sous le carter du treuil (1).

5. Le treuil mécanique à l'ergonomie améliorée selon l'une quelconque des revendications précédentes, **caractérisé en ce que** la poignée de frein (3) a sur une extrémité d'une partie centrale (31) un pied long (33) avec une première fixation (33') pour le second câble destiné à la désactivation du frein, et sur l'autre extrémité un pied court (34) avec une seconde fixation (34') pour un élément de raccordement (7), qui raccorde la poignée de frein et un élément automatique (8), ce qui fait que lors de l'activation de la traction, le frein est activé, et lorsqu'on tire sur le second câble pour la désactivation du frein, le frein est désactivé et verrouillé.

6. Le treuil mécanique à l'ergonomie améliorée selon la revendication précédente, **caractérisé par le fait que** ledit élément automatique (8) est installé sur le côté supérieur du carter du treuil près de la courroie de freinage et comprend un logement à l'intérieur duquel deux éléments sont présents, qui sont conçus pour se déplacer en alternance dans le logement, et deux billes installées entre lesdits éléments, où les billes permettent, en alternance, la désactivation du frein et l'activation de la traction.

7. Le treuil mécanique à l'ergonomie améliorée selon la revendication 6 ou la revendication 7, **caractérisé par le fait que** l'élément de raccordement (7) entre la poignée de frein (3) et l'élément automatique (8) est une plaque, une tige ou un câble Bowden ou tout autre élément approprié, qui permet le transfert à l'élément automatique (8).

8. Le treuil mécanique à l'ergonomie améliorée selon l'une quelconque des revendications précédentes, **caractérisé par le fait que** l'intégralité du mécanisme de contrôle est caché à l'intérieur d'un boîtier de protection rigide, qui est fixé au treuil ou de préférence est fabriqué en tant que partie du carter du treuil, où une partie du câble destiné à l'activation de la traction et une partie du câble et la poignée destinés au relâchement du frein ne sont pas logées dans ledit boîtier de protection pour permettre un accès à l'utilisateur, où lesdits câbles sont acheminés à l'extérieur du boîtier de protection par une ouverture dans le boîtier de protection.

9. Le treuil mécanique à l'ergonomie améliorée selon la revendication précédente, **caractérisé en ce que** le boîtier de protection fait partie du carter du treuil.

10. Le treuil mécanique à l'ergonomie améliorée selon la revendication 8 ou la revendication 9, **caractérisé en ce que** le boîtier de protection est installé sur le treuil de façon non-amovible par soudage, ou le boîtier de protection est monté sur le treuil de façon amovible, de préférence par le biais de vis.

11. La méthode de fonctionnement du mécanisme amélioré pour le contrôle du treuil mécanique selon les revendications 3 et 4 et d'autres revendications quand elles en dépendent, **caractérisée par le fait que** :
- lors de la traction du second câble pour la désactivation du frein, la poignée de frein (3) se déplace en raison du mouvement d'un élément, de préférence une poulie (5), monté sur une fixation (33') de la partie supérieure (33) de la poignée de frein (3), de façon à ce que l'élément roulant (4) monté sur la découpe courbe (32) de la poignée de frein (3) se déplace le long de la partie plate en direction du boîtier (2) du mécanisme de freinage ; en même temps une partie inférieure (11a) de la courroie de freinage (11) se déplace vers le bas par le biais de l'élément d'écartement (12) et du ressort (9), ce qui relâche la courroie de freinage (11) autour du tambour (13) et permet la rotation du tambour (13) et par conséquent le déroulement du câble du tambour (13) du treuil ;
- lors du relâchement du second câble, l'élément roulant (4) retourne à sa position initiale dans la découpe courbe (32) de la poignée de frein (3), ce qui tire l'élément d'écartement (12) vers le haut et par conséquent la partie inférieure (11a) de la courroie de freinage (11), comprimant ainsi la courroie de freinage (11) autour du tambour (13).
